# EUROPÄISCHE PATENTANMELDUNG

(11) **EP 2 826 753 A1**
(43) Veröffentlichungstag der Anmeldung: **21.01.2015**
(21) Anmeldenummer: 12006069.4
(22) Anmeldetag: 27.08.2012
(51) Int. Cl.: C02F 3/12, C02F 3/22

(54) **Kleinkläranlage**

(71) Anmelder: Kessel AG, 85101 Lenting (DE)
(72) Erfinder: Kessel, Bernhard, 85101 Lenting (DE)
(74) Vertreter: Grünecker, Kinkeldey, Stockmair & Schwanhäusser

(57) **Zusammenfassung**

Die Erfindung betrifft eine Kleinkläranlage (1) zum Reinigen von Abwasser, welche mindestens ein Klärbecken (3) zum mechanischen Vorreinigen des Abwassers sowie mindestens ein Belebungsbecken (4) zum biologischen Reinigen des Abwassers aufweist, wobei beide Becken (3, 4) miteinander in Fluidverbindung stehen, und in dem Belebungsbecken (4) ein Abscheider (6) zum zumindest teilweisen Abscheiden von in dem Abwasser befindlichen Sinkstoffen angeordnet ist, wobei der Abscheider (6) mindestens einen Zulauf (10) aufweist. Die Kleinkläranlage (1) wird dahingehend verbessert, dass sie die Vorteile aus einem kontinuierlichen und einem diskontinuierlichen Betrieb vereint und gleichzeitig eine sichere Prozessführung mit hoher Reinigungsleistung ermöglicht, indem der Abscheider (6) bodenseitig einen Schlammfang (13) zum Sammeln von Sinkstoffen aufweist, und der Zulauf (10) als eine den Volumenstrom des Abwassers in den Abscheider (6) dosierende Drossel ausgebildet ist.

## Beschreibung

Die Erfindung betrifft eine Kleinkläranlage gemäß dem Oberbegriff des Anspruchs 1 sowie ein Verfahren zum Reinigen von Abwasser in einer Kleinkläranlage gemäß dem Oberbegriff des Anspruchs 11.

Kleinkläranlagen kommen meist in Gebäuden zum Einsatz, welche nicht an das kommunale Abwassernetz angeschlossen sind. Die Größe der eingesetzten Kleinkläranlage richtet sich nach der täglich in dem Gebäude verbrauchten Wassermenge.

Kleinkläranlagen arbeiten häufig nach dem sogenannten Belebtschlammverfahren. Hierbei übernimmt eine im Wasser gelöste Bakterienmasse die biologische Reinigung des Abwassers. Es wird zwischen einem kontinuierlichen und einem diskontinuierlichen Betrieb unterschieden.

Beim kontinuierlichen Verfahren, dem Continuous Flow Reactor (CFR), findet in der Regel eine räumliche Trennung der einzelnen Schritte statt, wobei mehrere Becken zur Klärung und zur Sedimentation eingesetzt werden. Sobald Abwasser über den Zulauf in die Kläranlage einfließt, verlässt die gleiche Menge gereinigten Abwassers die Kläranlage über den Auslauf, das heißt es besteht ein kontinuierlicher Fluss.

Beim sequentiellen Verfahren, dem Sequencing Batch Reactor (SBR), findet eine zeitliche Trennung der einzelnen Schritte statt. In die Kläranlage einfließendes Abwasser wird zunächst aufgestaut und gereinigt, wobei das gereinigte Abwasser in bestimmten Zyklen chargenweise aus der Kläranlage gefördert wird.

Es sind auch Mischformen von Kläranlagen bekannt, welche das SBR-Verfahren und das CFR-Verfahren kombinieren. Auch die Kleinkläranlage der vorliegenden Erfindung kann zu einer solchen Mischform gezählt werden. Die DE 10 2009 032 763 A1 offenbart eine gattungsgemäße Kleinkläranlage.

Diese Druckschrift beschreibt eine Kleinkläranlage mit einem Belebungsbecken, in welchem sich unter anderem eine Trennvorrichtung befindet, deren Innenraum als Beruhigungszone für das zu reinigende Abwasser dient. Das Abwasser strömt über eine bodenseitige Öffnung in die Trennvorrichtung ein. Diese bodenseitige Öffnung weist eine Schräge auf, welche sich in der Trennvorrichtung absetzende Abwasserbestandteile in das Belebungsbecken zurückleitet.

Ein Druckluftheber fördert den sich im Belebungsbecken ansammelnden Schlamm in eine mechanische Reinigungsstufe zurück. Ein weiterer Druckluftheber befindet sich innerhalb der Trennvorrichtung. Dieser pumpt das gereinigte Abwasser aus der Trennvorrichtung in den Ablauf.

Der Erfindung liegt die Aufgabe zugrunde, eine Kleinkläranlage der eingangs genannten Gattung bereitzustellen, welche die Vorteile aus dem kontinuierlichen und dem diskontinuierlichen Betrieb vereint und gleichzeitig eine sichere Prozessführung mit hoher Reinigungsleistung ermöglicht.

Die gestellte Aufgabe wird erfindungsgemäß durch eine Kleinkläranlage mit den Merkmalen des Anspruchs 1.

Hierfür stellt der in dem Belebungsbecken angeordnete Abscheider eine Beruhigungszone für das zu reinigende Abwasser dar. Der Abscheider weist bodenseitig einen Schlammfang zum Sammeln von Sinkstoffen auf. Der Abscheider weist außerdem einen Zulauf auf, welcher beispielsweise an einer Seitenwand des Abscheiders angeordnet sein kann. Dieser Zulauf ist als eine Drossel ausgebildet, die den in den Abscheider einfließenden Volumenstrom des Abwassers dosiert. Das durch den als Drossel ausgebildeten Zulauf in den Abscheider einfließende Abwasser wird dabei derart dosiert, dass die in der Beruhigungszone des Abscheiders stattfindenden Absetzprozesse wenig Verwirbelungen erfahren. Dies bedeutet, dass Sinkstoffe des im Abscheider befindlichen Abwasssers ausreichend Zeit haben, sich trotz des durch den Zulauf einströmenden Abwassers in dem bodenseitigen Schlammfang des Abscheiders abzusetzen. Selbst bei einem großen Abwasserstoß, wie beispielsweise der Zulauf einer entleerten Badewanne, wird das durch den als Drossel ausgebildeten Zulauf in den Abscheider einströmende Abwasser derart dosiert, dass in der Beruhigungszone wenig Verwirbelungen stattfinden. Die Schlammmenge, die sich innerhalb des Abscheiders in dem bodenseitig angeordneten Schlammfang ansammelt ist im Vergleich zu der in dem Belebungsbecken anfallenden Schlammmenge gering. Diese geringe Menge an anfallendem Schlamm sorgt für eine gute Ausbildung einer Beruhigungszone innerhalb des Abscheiders.

Beispielsweise kann eine Rückführungsvorrichtung zum Rückführen von Abwasser und Schlamm zumindest teilweise innerhalb des Abscheiders angeordnet sein. Der in dem Abscheider angeordnete Teil der Rückführungsvorrichtung fördert den sich im Abscheider absetzenden Schlamm in das Klärbecken zurück. Hierdurch wird die Schlammmenge in dem Abscheider in einem akzeptablen Volumen gehalten. Die Funktionsfähigkeit des Abscheiders kann so gut gewährleistet werden.

Es wird vorgeschlagen, dass die Rückführungsvorrichtung strömungstechnisch mit dem Zulauf des Abscheiders verbunden ist. So kann mit Schlamm verwirbeltes Abwasser, welches durch den Zulauf in den Abscheider einströmt, direkt von dem Strom der Rückführvorrichtung in das Klärbecken rückgeführt werden, so dass auch zufliessender Schlamm umgehend zurückgefördert wird.

Es ist denkbar, dass eine ansaugseitige Öffnung der Rückführungsvorrichtung im Bereich des Schlammfangs des Abscheiders angeordnet sein kann. So kann der sich im Schlammfang zentral ansammelnde Schlamm bei Bedarf aus dem Abscheider in das Klärbecken zurückgeführt werden.

Wahlweise kann die Rückführungsvorrichtung als ein eine Druckluftleitung aufweisender Druckluftheber ausgeführt sein, wobei der Zulauf in die Rückführungsvorrichtung mündet, und die Druckluftleitung zwischen der Ansaugöffnung der Rückführungsvorrichtung und dem Zulauf des Abscheiders angeordnet ist. Durch diese Anordnung entsteht während des Betriebs des Drucklufthebers ein Unterdruck im Bereich des Zulaufs, der ausreichend hoch ist, um an der Drossel anhaftende Verschmutzungen zu lösen und in die Rückführvorrichtung abzuführen.

Es ist denkbar, dass ein Druckluftheber der Rückführungsvorrichtung etwa zeitgleich zusammen mit einer in dem Belebungsbecken angeordneten Belüftungsvorrichtung betreibbar ist. Somit kann sowohl der Druckluftheber als auch die Belüftungsvorrichtung an dieselbe Druckluftversorgungsleitung angeschlossen werden. Wahlweise kann in einer derartigen Ausführungsform eine einfache Weiche, zum Beispiel ein T-Stück genutzt werden, so dass der elektromechanische Aufwand zum Betreiben der Kleinkläranlage gering gehalten werden kann.

Es wird vorgeschlagen, dass die Drosselwirkung des Zulaufs derart ausgelegt ist, dass ein durch den Zulauf in den Abscheider einströmender Volumenstrom des Abwassers geringer ist als ein im gleichen Zeitraum durch die Rückführungsvorrichtung aus dem Abscheider herausgeleiteter Volumenstrom. Dies bewirkt, dass der Wasserstand des in dem Abscheider befindlichen Abwassers während des Betriebs der Rückführvorrichtung kontinuierlich sinkt und sich unterhalb des Auslaufs befindet. Mit Schlamm verwirbeltes Abwasser, welches sich in dem Abscheider befindet, kann zu diesem Zeitpunkt nicht aus dem Ablauf ausfließen. Wenn der Druckluftheber nicht mehr in Betrieb ist, sorgt das über die Drossel dosiert zulaufende Abwasser dafür, dass der Wasserstand in dem Abscheider wieder bis zu dem Ablauf ansteigt. Da das Abwasser in dem Abscheider jedoch langsamer ansteigt als der darin aufgewirbelte Schlamm sich absetzt, gelangt größtenteils Klarwasser in den Ablauf, was zu einer guten Reinigungsleistung der Kleinkläranlage beiträgt.

Wahlweise kann der Abscheider einen natürlichen Überlauf aufweisenden Auslauf aufweisen, durch den das im Abscheider angestaute Abwasser aus der Kleinkläranlage herausfließen kann. So kann das im Abscheider aufgestaute Abwasser beruhigt aus der Kleinkläranlage herausfließen.

Es ist vorstellbar, dass der Abscheider eine zu dem Schlammfang verlaufende Schräge aufweist, an welcher im Abwasser befindliche Sinkstoffe abgleiten können. Durch diese Schräge wird sichergestellt, dass sich die abgesetzten Sinkstoffe an einer bestimmten Stelle innerhalb des Schlammfangs ansammeln und die Sinkstoffe beim Entleeren, zum Beispiel durch Absaugen mit der Absaugvorrichtung, nahezu vollständig erfasst werden können.

Beispielsweise kann der Zulauf auf einer Höhe relativ zu dem Boden des Belebungsbeckens angeordnet sein, welche einem Füllstand der in dem Belebungsbecken angesammelten Sinkstoffe entspricht, und die Höhe kann derart gewählt sein, dass der Füllstand etwa 30% bis 50% des Gesamtvolumens des Belebungsbeckens entspricht, insbesondere etwa 20% bis 30% des Gesamtvolumens des Belebungsbeckens entspricht, und alternativ etwa 10% bis 20% des Gesamtvolumens des Belebungsbeckens entspricht. Durch diese Anordnung kann der Füllstand des sich in dem Belebungsbecken befindlichen Belebtschlamms reguliert werden, um eine gute biologische Reinigungsleistung durch das Vorhalten einer bestimmten Menge an Belebtschlamm zu erzielen. Sobald die Füllstandshöhe des Belebtschlamms in dem Belebungsbecken nämlich die Höhe des Zulaufs erreicht, kann dieser Belebtschlamm direkt durch den Zulauf abgesaugt werden.

Zur Lösung der eingangs genannten Aufgabe wird ferner ein Verfahren mit den Merkmalen des Anspruchs 11 vorgeschlagen. Dabei sammeln sich abgeschiedene Sinkstoffe in einem Schlammfang, welcher bodenseitig in dem Abscheider angeordnet ist. Außerdem fließt das Abwasser über einen Zulauf in den Abscheider, wobei der in den Abscheider einfließende Volumenstrom des Abwassers über eine Drossel des Zulaufs dosiert wird. Durch das Dosieren des in den Abscheider einfließenden Abwassers erfahren die in der Beruhigungszone des Abscheiders stattfindenden Absetzprozesse wenig Verwirbelungen. Außerdem ist das Sammeln von Schlamm in einem Schlammfang vorteilhaft, da eine sich hierin ansammelnde Schlammmenge im Vergleich zu der in dem Belebungsbecken anfallenden Schlammmenge gering ausfällt. Diese geringe Menge an anfallendem Schlamm sorgt für eine gute Ausbildung einer Beruhigungszone innerhalb des Abscheiders.

Es ist vorstellbar, dass Abwasser und Schlamm aus dem Schlammfang über eine Rückführungsvorrichtung, welche zumindest teilweise innerhalb des Abscheiders angeordnet ist, in das Klärbecken rückgeführt werden. So kann die sich in dem Schlammfang ansammelnde Schlammmenge in einem akzeptablen Volumen gehalten werden.

Es wird vorgeschlagen, dass der rückgeführte Abwasserstrom durch den Zulauf strömendes Abwasser mit durch die Rückführungsvorrichtung fördert, insbesondere saugt. Damit wird schlammhaltiges Abwasser, das von dem Belebungsbecken in den Abscheider einströmt direkt von der Rückführungsvorrichtung in das Klärbecken zurückgefördert.

Es ist denkbar, dass der Druckluftheber im Zulauf einen Unterdruck erzeugt, der im Bereich der Drossel befindliche Verschmutzungen löst und in die Rückführungsvorrichtung fördert. So kann ein möglichst gleichmäßiger Strom durch die Drossel sichergestellt werden, was zu einer guten Reinigungsleistung der Kleinkläranlage führt.

Beispielsweise kann der Druckluftheber etwa zeitgleich zusammen mit einer in dem Belebungsbecken angeordneten Belüftungsvorrichtung betrieben werden. Damit können Bauteile wie beispielsweise Pumpen und Druckluftleitungen gemeinsam genutzt werden.

Es wird vorgeschlagen, dass die Drossel den Volumenstrom des zulaufenden Abwassers dosiert, so dass der Volumenstrom des zulaufenden Abwassers geringer ist als ein im gleichen Zeitraum durch die Rückführungsvorrichtung aus dem Abscheider herausgeleiteter Abwasservolumenstrom. Dies führt zu einem Absenken des Abwassers in dem Abscheider, so dass mit Schlamm verwirbeltes Abwasser sicher in dem Abscheider zurückgehalten werden kann.

Es ist denkbar, dass sich innerhalb des Schlammfangs des Abscheiders eine Schicht von Sinkstoffen ansammelt, dessen Höhe sich von der Höhe der im Belebungsbecken angesammelten Schicht von Sinkstoffen unterscheidet. So kann sichergestellt werden, dass sich in dem Abscheider im Vergleich zu dem Belebungsbecken eine geringe Schlammmenge ansammelt, wodurch eine gute Beruhigungszone bereitgestellt werden kann.

Eine mögliche Ausführungsform der Erfindung wird anhand der Zeichnung erläutert. Es zeigen:
- Figur 1: eine Schnittansicht einer erfindungsgemäßen Kleinkläranlage im Normalbetrieb bei abgeschalteter Druckluftzufuhr,
- Figur 2: die Schnittansicht aus Figur 1 zu einem Zeitpunkt, zu dem die Druckluftzufuhr begonnen hat,
- Figur 3: die Schnittansicht aus Figur 1 zu einem Zeitpunkt, zu dem die Druckluftzufuhr stoppt, und
- Figur 4: die Schnittansicht aus Figur 1 bei abgeschalteter Druckluftzufuhr und zu einem Zeitpunkt, zu dem der Absetzvorgang innerhalb des Abscheiders stattfindet.

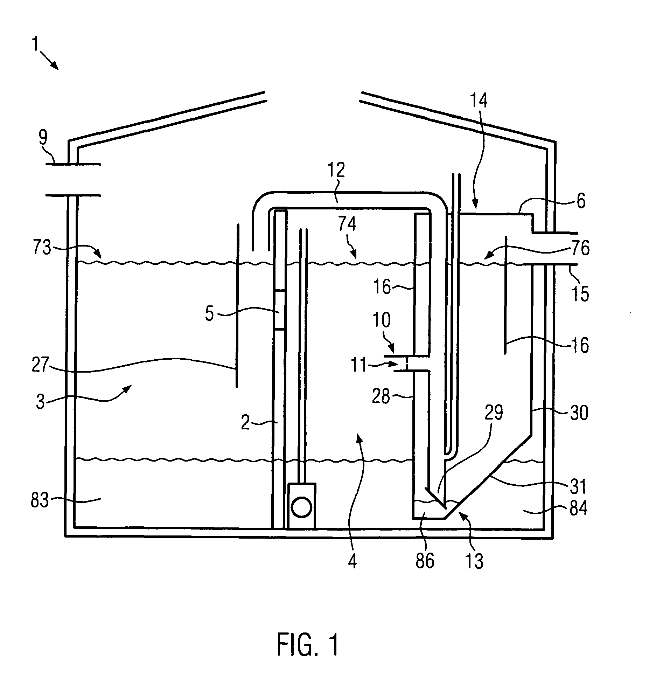

Figur 1 zeigt eine erfindungsgemäße Kleinkläranlage 1, welche nach dem Belebtschlammverfahren arbeitet. Eine Trennwand 2 trennt die Kleinkläranlage 1 in ein Klärbecken 3 und ein Belebungsbecken 4. Die Trennwand 2 weist eine Öffnung 5 auf, durch die das Klärbecken 3 und das Belebungsbecken 4 miteinander in Fluidverbindung stehen.

In dem Belebungsbecken 4 ist ein Abscheider 6 angeordnet. Der Abscheider 6 weist an einer der Trennwand 2 zugewandten seitlichen Wandung 28 einen Zulauf 10 auf, durch den in dem Belebungsbecken 4 befindliches Abwasser 74 in den Abscheider 6 hineinfließen kann. Der Zulauf 10 ist als eine den Volumenstrom des in den Abscheider 6 einfließenden Abwassers dosierende Drossel ausgebildet. Diese Drossel kann einstellbar sein, das heißt die Drossel kann einen veränderlich einstellbaren Querschnitt aufweisen.

In den Figuren ist der Zulauf 10 als ein Rohr mit einer integrierten Blende 11 dargestellt. Bei dem Zulauf 10 kann es sich jedoch auch um ein in der Wand des Abscheiders 6 vorgesehenes Loch handeln. Außerdem ist der Zulauf 10 in den Figuren mit einer Rückführungsvorrichtung 12 verbunden. Es ist jedoch auch vorstellbar, dass der Zulauf 10 in den Abscheider 6 hineinführt, ohne dass der Zulauf 10 mit der Rückfördervorrichtung 12 verbunden ist.

Der Abscheider 6 weist außerdem bodenseitig einen Schlammfang 13 auf, in dem sich in dem Abscheider 6 befindlicher Schlamm 86 ansammeln kann. In diesen Schlammfang 13 ragt eine Ansaugöffnung 29 der Rückführungsvorrichtung 12 hinein.

Der Abscheider 6 besteht in der vorliegenden Ausführungsform im Wesentlichen aus einem geschlossenen Behälter, das heißt der bodenseitige Schlammfang 13 weist keine direkte Verbindung zu dem Belebungsbecken 4 auf. Abwasser kann lediglich über den Zulauf 10 oder über eine auf der Oberseite des Abscheiders 6 vorhandene Notüberlauföffnung 14 einströmen. Der Abscheider 6 weißt also eine in sich geschlossene Form auf mit einer im Querschnitt durchgehenden oben liegenden Überlauföffnung 14.

Der Abscheider 6 weist außerdem an einer der Trennwand 2 gegenüberliegenden Wandung einen seitlich austretenden Auslauf 15 auf. Der Auslauf 15 weist einen natürlichen Überlauf auf, das heißt der Auslauf 15 ist gegenüber dem horizontalen Wasserspiegel geneigt. Das Abwasser kann so ohne Verursachung größerer Turbulenzen aus dem Abscheider 6 durch den Auslauf 15 aus der Kleinkläranlage 1 ausfließen. Zur weiteren Beruhigung von turbulenten Abwasserströmungen kann ein Auslaufbauwerk 16 vor dem Auslauf 15 angeordnet sein.

Sowohl in den beiden Becken 3 und 4 als auch in dem Abscheider 6 befindet sich stets eine gewisse Menge an Abwasser 73, 74, 76 sowie eine gewisse Menge an Schlamm 83, 84, 86. In Figur 1 ist der Pegel des Abwassers in dem Klärbecken 3, in dem Belebungsbecken 4 und in dem Abscheider 6 etwa gleich. Wie nachfolgend beschrieben wird, können diese Abwasserpegel je nach Zyklus der Kleinkläranlage 1 jedoch deutlich voneinander abweichen.

Die Höhe der Schlammschicht 86 innerhalb des Abscheiders 6 unterscheidet sich zu der Höhe der Schlammschicht 83, welche sich in dem Klärbecken 3 befindet, beziehungsweise zu der Höhe der Schlammschicht 84, welche sich in dem Belebungsbecken 4 befindet. In Figur 1 ist die Höhe der Schlammschichten 83 und 84 in den beiden Becken 3 und 4 annähernd gleich.

Bei dem in der vorliegenden Anmeldung erwähnten Schlamm handelt es sich um sogenannten Belebtschlamm. Außerdem werden im Abwasser befindliche Teile, deren Dichte größer ist als die Dichte von Wasser und welche folglich zu Boden sinken, als Sinkstoffe bezeichnet. Diese Sinkstoffe können Bestandteil des in der vorliegenden Anmeldung erwähnten Schlamms sein.

Die Kleinkläranlage 1 gemäß der vorliegenden Erfindung wird zyklisch betrieben, wobei ein Zyklus beispielsweise 10 Minuten betragen kann. Hierbei befindet sich die Kleinkläranlage 1 etwa sieben Minuten im sogenannten Normalbetrieb, etwa zwei Minuten im Belüftungsbetrieb und etwa eine Minute im Ausgleichsbetrieb.

In Figur 1 befindet sich die Kleinkläranlage 1 zunächst im Normalbetrieb. Hierbei fließt Abwasser durch den Einlauf 9 in das Klärbecken 3 und führt so zu einem geringen Anstieg des Wasserspiegels des in dem Klärbecken 3 befindlichen Abwassers 73. Hier findet bereits eine erste mechanische Vorreinigung im Sinne einer Sedimentation statt. Grobe im Abwasser 73 befindliche Anteile mit einer größeren Dichte als Wasser sinken auf den Boden des Klärbeckens 3. Grobe im Abwasser 73 befindliche Anteile mit einer geringeren Dichte als Wasser schwimmen auf dem im Klärbecken 3 befindlichen Abwasser 73 auf.

Das bereits mechanisch vorgereinigte Abwasser 73, welches sich etwa auf Höhe der Öffnung 5 der Trennwand 2 befindet, fließt aufgrund des hydrostatischen Drucks durch die Öffnung 5 in das Belebungsbecken 4. Eine optionale Barriere 27 kann große Schwimm- und Schwebstoffe, wie zum Beispiel Hygieneartikel von der Trennwand 2 fernhalten.

Von dem Belebungsbecken 4 fließt das Abwasser dosiert durch den als Drossel ausgebildeten Zulauf 10 in den Abscheider 6 ein. Der Wasserstand im Abscheider 6 steigt an und das oben befindliche Klarwasser fließt über den Auslauf 15 aus der Kleinkläranlage 1 aus.

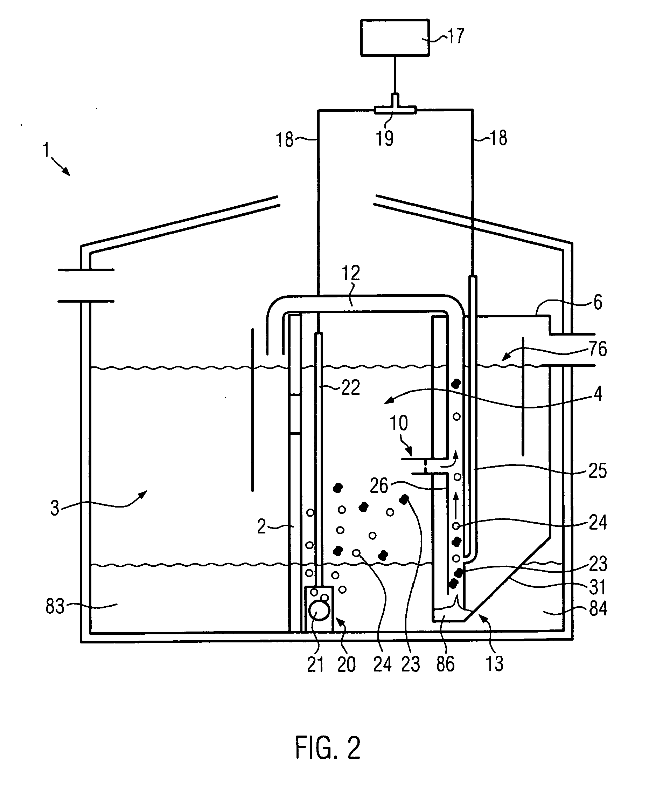

Figur 2 zeigt die gleiche Schnittdarstellung wie Figur 1, weshalb dieselben Bauteile mit denselben Bezugszeichen wie in Figur 1 versehen sind. Figur 2 zeigt die Kleinkläranlage 1 zu Beginn des Belüftungsbetriebs.

In dem Belebungsbecken 4 ist eine Belüftungseinrichtung 20 angeordnet. Die Belüftungseinrichtung 20 weist eine Belüftungsleitung 22 auf, durch die Luft zugeführt wird. Die Belüftungseinrichtung 20 weist außerdem ein Belüfterelement, hier ein Verteilerrohr 21 auf, welches sich in Richtung der Zeichenebene in seiner Längsrichtung entlang der Trennwand 2 erstreckt. Es ist vorstellbar, dass die Belüftungseinrichtung 20 mehrere Belüfterelemente aufweist. Diese können in beliebiger geometrischer Lage in dem Belebungsbecken 4 angeordnet sein und verschiedene geometrische Formen aufweisen.

Während des Betriebs der Belüftungseinrichtung 20 strömen Luftblasen 24 aus dem Verteilerrohr 21 heraus und wirbeln den Schlamm 84 auf. Die Luftblasen 24 beginnen sich zusammen mit Schlammflocken 23 in dem Belebungsbecken 4 zu verteilen.

Die Belüftungsleitung 22 der Belüftungseinrichtung 20 ist mit einer Druckluftleitung 18 verbunden. Das andere Ende der Druckluftleitung 18 ist mit einer Drucklufterzeugungsvorrichtung 17, wie zum Beispiel einem Kompressor oder einer Luftpumpe verbunden.

Die in dem Abscheider 6 angeordnete Rückführungsvorrichtung 12 ist als ein Druckluftheber (auch Mammutpumpe genannt) ausgeführt. Der Druckluftheber 12 weist eine Druckluftleitung 25 auf, welche ebenfalls an eine Druckluftleitung 18 der Pumpe 17 angeschlossen ist.

Die mit der Belüftungseinrichtung 20 bzw. mit dem Druckluftheber 12 verbundenen Druckluftleitungen 18 können einfach über ein T-Stück 19 mit der Pumpe 17 verbunden werden. Bei Betrieb der Pumpe 17 werden die Belüftungseinrichtung 20 und der Druckluftheber 12 so gleichzeitig mit Druckluft beaufschlagt. Die Pumpe 17 muss hierbei nicht kontinuierlich, sondern kann intermittierend angesteuert werden. So kann die Pumpe 17 beispielsweise in einem Zyklus von 10 Minuten für jeweils 2 Minuten laufen.

Aus dem Stand der Technik ist bekannt, dass eine Belüftungseinrichtung 20 und ein Druckluftheber 12 nicht gleichzeitig, sondern nacheinander betrieben werden. Hierfür werden entweder zwei Pumpen 17 benötigt, oder das T-Stück 19 wird durch ein Ventil ersetzt. Im Gegensatz dazu kann in der vorliegenden Erfindung der elektromechanische Aufwand sehr gering gehalten werden. Zudem sinken die Wartungs- und Reparaturkosten, da einfache T-Stücke 19 wesentlich verschleißärmer arbeiten als Ventile.

Die Druckluftleitung 25 des Drucklufthebers 12 ist mit ihrem dem T-Stück 19 gegenüberliegenden Ende mit dem innerhalb des Abscheiders 6 angeordneten Teil des Drucklufthebers 12, das heißt mit dem Steigrohr 26 verbunden. Die durch die Pumpe 17 erzeugte Druckluft wird über die Druckluftleitungen 18 und 25 in das Steigrohr 26 des Drucklufthebers 12 eingeblasen. Das bodenseitige Ende 29 des Steigrohrs 26 befindet sich im Bereich des Schlammfangs 13, so dass der Druckluftheber im Betrieb den in dem Schlammfang 13 angesammelten Schlamm 86 nahezu vollständig heraussaugt.

Neben dem Schlamm 86 saugt der Druckluftheber 12 in seinem Betrieb aber auch Abwasser 76 aus dem Abscheider 6 heraus. Sowohl der Schlamm 86 als auch das Abwasser 76 werden über den Druckluftheber 12 von dem Abscheider 6 in das Klärbecken 3 zurückgefördert.

Das durch die Druckluft 12 in dem Steigrohr 26 aufsteigende Gemisch aus Abwasser 76 und Schlamm 86 erzeugt beim Vorbeiströmen im Bereich des Anschlusses des Zulaufs 10 einen Unterdruck, der das durch den Zulauf 10 aus dem Belebungsbecken 4 einströmende Abwasser 74 ansaugt. Dieser Ansaugdruck reicht aus, um im Bereich der Drossel anhaftende Rückstände und Verschmutzungen wie zum Beispiel Schlamm oder Algen zu lösen.

Das durch den Zulauf 10 aus dem Belebungsbecken 4 einströmende Abwasser 74 gelangt in dieser Ausführungsform unmittelbar in das Steigrohr 26 und wird im Belüftungsbetrieb zusammen mit dem aus dem Abscheider 6 geförderten Gemisch aus Schlamm 86 und Abwasser 76 über den Druckluftheber 12 in das Klärbecken 3 zurückgefördert.

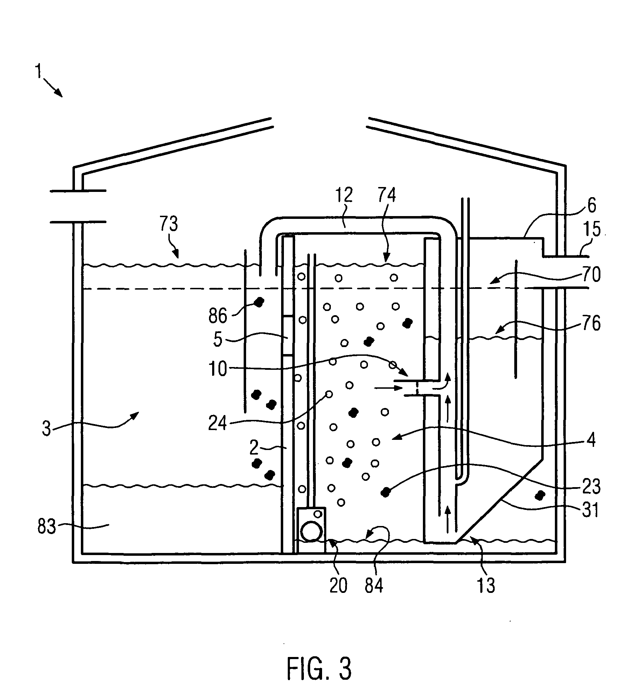

Figur 3 zeigt die Kleinkläranlage 1 zum Ende des Belüftungsbetriebs. Die Belüftungseinrichtung 20 hat während des Belüftungsbetriebs eine große Menge an Schlamm 84 aufgewirbelt, wobei sich Belebtschlamm (Schlammflocken) 23 und Luftblasen 24 in dem gesamten Belebungsbecken 4 verteilt haben.

In dem Abscheider 6 hat die Rückführungsvorrichtung 12 den in dem Schlammfang 13 angesammelten Schlamm 86 nahezu vollständig in das Klärbecken 3 zurückgefördert. Wie bereits erwähnt, fördert die Rückführungsvorrichtung 12 auch in dem Abscheider 6 befindliches Abwasser 76 in das Klärbecken 3 zurück. Die durch die Rückführungsvorrichtung 12 aus dem Abscheider 6 herausgeförderte Menge an Schlamm 86 und Abwasser 76 ist größer als die Menge an Abwasser, die aus dem Belebungsbecken 4 durch den als Drossel ausgebildeten Zulauf 10 in den Abscheider 6 nachfließt.

Dadurch sinkt in dem Abscheider 6 der Füllstand des darin befindlichen Abwassers 76 gegenüber dem Normalbetrieb ab. Zur Verdeutlichung symbolisiert die Strichlinie 70 den Füllstand des Abwassers im Normalbetrieb. Während des Belüftungsbetriebs, das heißt in der Zeit, die zwischen den in den Figuren 2 und 3 dargestellten Betriebszuständen vergeht, sinkt der in dem Abscheider 6 befindliche Abwasserspiegel von der Füllstandshöhe 70 kontinuierlich auf die Füllstandshöhe 76 ab.

Das Absinken des Wasserspiegels in dem Abscheider 6 hat zur Folge, dass das in dem Abscheider 6 befindliche Abwasser 76 nicht mehr aus dem Auslauf 15 ausfließen kann. Ein Ausleiten dieses durchmischten Abwassers ist jedoch auch nicht gewünscht, da durch den Betrieb der Rückführungsvorrichtung 12 sowie aufgrund des aus dem Belebungsbecken 4 durch den Zulauf 10 nachfließenden Abwassers 74 das in dem Abscheider 6 befindliche Abwasser 76 mit Schlammbestandteilen durchmischt sein kann. Letzteres betrifft insbesondere die Ausführungsformen, in denen der Zulauf 10 nicht mit dem Steigrohr 26 verbunden ist.

Der Zulauf 10 kann aber auch, wie in den Figuren dargestellt, mit dem Steigrohr 26 der Rückführungsvorrichtung 12 verbunden sein. Hierdurch wird einerseits das aus dem Belebungsbecken 4 durchwirbelte nachströmende Abwasser 74 direkt in die Rückführungsvorrichtung 12 geleitet und in das Klärbecken 3 zurückgeführt. So kann vermieden werden, dass zu viele der in dem Belebungsbecken 4 aufgewirbelten Schlammflocken 23 in den Abscheider 6 gelangen, was nicht erwünscht ist. Zudem verursacht diese Ausführungsform deutlich weniger Turbulenzen in dem im Abscheider 6 befindlichen Abwasser 76 im Gegensatz zu einer Ausführungsform, in welcher der Zulauf 10 nicht mit dem Steigrohr 26 der Rückführungsvorrichtung 12 verbunden ist.

Andererseits kann aufgrund der Verbindung des Zulaufs 10 mit dem Steigrohr 26 der Wasserspiegel des in dem Abscheider 6 befindlichen Abwassers 76 schneller gesenkt werden, da das aus dem Belebungsbecken 4 nachströmende Abwasser 74 nicht erst in den Abscheider 6 gelangt, sondern direkt über die Rückführungsvorrichtung 12 in das Klärbecken 3 zurückgefördert wird.

Das über die Rückführungsvorrichtung 12 aus dem Abscheider 6 in das Klärbecken 3 zurückgeförderte Gemisch aus Abwasser 76 und Schlamm 86 führt zu einem Ansteigen des Abwasserspiegels 73 in dem Klärbecken 3. Das Abwasser 73 in dem Klärbecken 3 steigt in der Zeit zwischen den in den Figuren 2 und 3 dargestellten Zuständen der Anlage kontinuierlich von dem Wasserspiegel 70 zu dem Wasserspiegel 73 an.

Der aus dem Abscheider 6 über die Rückführungsvorrichtung 12 zurückgeförderte Schlamm 86 setzt sich zumindest teilweise am Boden des Klärbeckens 3 in dem darin befindlichen Schlamm 83 ab. Dieser sogenannte Überschussschlamm kann bei Bedarf aus dem Klärbecken 3 entnommen und entsorgt werden.

Da das in dem Klärbecken 3 befindliche Abwasser kontinuierlich durch das in der Trennwand 2 befindliche Loch 5 in das Belebungsbecken 4 nachströmt, kann der Abwasserspiegel des in dem Belebungsbecken 4 befindlichen Abwassers 74 gleich hoch oder geringer als der Wasserspiegel des in dem Klärbecken 3 befindlichen Abwassers 73 sein. Auch in dem Belebungsbecken 4 ist die Differenz des Abwasserspiegels 74 zu dem im Normalbetrieb vorliegenden Wasserspiegel 70 zu erkennen.

Außerdem tritt der aus der Rückführungsvorrichtung 12 austretende Schlamm 86 zumindest teilweise zusammen mit dem in dem Klärbecken 3 befindlichen Abwasser 73 durch das in der Trennwand 2 befindliche Loch 5 zu dem Belebungsbecken 4 hindurch. Die Belebtschlammmenge 84 in dem Belebungsbecken 4 kann so reguliert werden.

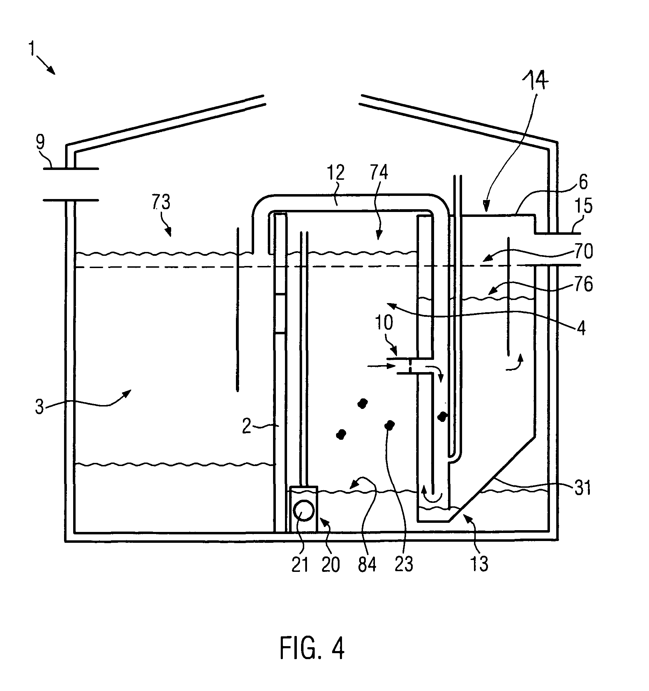

Figur 4 zeigt die Kleinkläranlage 1 im Ausgleichsbetrieb. Hier finden die Absetzvorgänge statt und die unterschiedlichen Abwasserspiegel 73, 74, 76 pendeln sich wieder auf das Niveau 70 des Normalbetriebs ein.

In dem Belebungsbecken 4 setzen sich die aufgewirbelten Schlammflocken 23 nach der Belüftungsphase aufgrund der Beruhigung des Abwassers 74 in dem Schlamm 84 ab. Die Füllstandshöhe des Schlamms 84 steigt somit wieder an und der Schlamm 84 bedeckt wieder das Verteilerrohr 21 der Belüftungseinrichtung 20.

Durch den als Drossel ausgebildeten Zulauf 10 strömt das beruhigte, das heißt das nun wenig Schlammflocken 23 aufweisende Abwasser 74 von dem Belebungsbecken 4 in den Abscheider 6. Der Volumenstrom des von dem Belebungsbecken 4 in den Abscheider 6 einfließenden Abwassers wird dabei stets über den als Drossel ausgebildeten Zulauf 10 dosiert.

Diese Dosierung ist dergestalt, dass das in dem Abscheider 6 befindliche Abwasser 76 in einem vorgegebenen Zeitraum langsamer ansteigt als in dem Abwasser 76 befindliche Sinkstoffe in demselben Zeitraum absinken. Durch diese Dosierung des in den Abscheider 6 einfließenden Abwassers bildet sich in dem Abscheider 6 eine Beruhigungszone, in welcher sich die Sinkstoffe in dem Schlammfang 13 absetzen können.

In den Figuren ist der Zulauf 10 mit dem Steigrohr 26 der Rückführungsvorrichtung 12 verbunden. Befindet sich die Kleinkläranlage 1 nicht im Belüftungsbetrieb, so strömt das durch den Zulauf 10 einfließende Abwasser durch das Steigrohr 26 nach unten in Richtung des Schlammfangs 13 und tritt dort aus. Da sich der Schlammfang 13 vorzugsweise an einer tiefsten Stelle des Abscheiders 6 befindet, kann der Absetzvorgang der Sinkstoffe weiter optimiert werden, da die Sinkstoffe in dieser Ausführungsform einen kürzeren Weg bis zum Boden des Abscheiders 6 zurücklegen müssen.

Außerdem kann der Abscheider 6 eine zu dem Schlammfang 13 verlaufende Schräge 31 aufweisen, an der Sinkstoffe abgleiten können. Die Sinkstoffe werden so direkt in den Schlammfang 13 geleitet, wo sie zentral gesammelt werden.

Durch die in dem Abscheider 6 stattfindende Sedimentation befindet sich in einem oberen Bereich des in dem Abscheider 6 befindlichen Abwassers 76 nahezu vollständig geklärtes Klarwasser. Sobald der Abwasserspiegel 76 den Wasserspiegel 70 des Normalbetriebs erreicht, fließt dieses Klarwasser in den als Überlauf ausgebildeten Auslauf 15. Aus der Kleinkläranlage 1 fließt somit nahezu vollständig geklärtes Klarwasser aus.

Die jeweiligen Volumina des Klärbeckens 3, des Belebungsbeckens 4 und des Abscheiders 6 sowie die Dosierung des über die Drossel 10 zulaufenden Volumenstroms bestimmen die Zykluszeiten der Kleinkläranlage 1. In dem in den Figuren dargestellten Schnittbild ist lediglich ein Zulauf 10 zu erkennen. Es ist jedoch auch möglich, mehrere als Drossel ausgebildete Zuläufe 10 an dem Abscheider vorzusehen.

Beim Belebtschlammverfahren ist eine bestimmte Menge an Belebtschlamm die Voraussetzung für eine optimale biologische Reinigungsleistung. Bei der Kleinkläranlage 1 der vorliegenden Erfindung kann diese Menge an Belebtschlamm etwa 30% bis 50% des Gesamtvolumens des Belebungsbeckens 4 betragen. Zur Regulierung der Belebtschlammmenge 84 kann der Zulauf 10 an einer Höhe an dem Abscheider 6 angebracht sein, die der gewünschten Füllstandshöhe des Belebtschlamms 84 im Belebungsbecken 4 entspricht.

Sobald die Füllstandshöhe des Belebtschlamms 84 den Zulauf 10 erreicht, wird während der Belüftungsphase der auf Höhe des Zulaufs 10 liegende Belebtschlamm 84 über den Zulauf 10 eingesaugt und über die Rückführungsvorrichtung 12 als Überschussschlamm in das Klärbecken 3 zurückgefördert. So kann die optimale Menge an Belebtschlamm 84 anhand der Positionierung des Zulaufs 10 in dem Belebungsbecken 4 eingestellt werden.

Die Kleinkläranlage 1 verfügt außerdem über ein Notüberlaufsystem. Es kann vorkommen, dass derart viel Abwasser in die Kleinkläranlage 1 eingeleitet wird, dass sich aufgrund der durch die Drossel 10 begrenzten Ablaufleistung des Abscheiders 6 die Abwasserspiegel 73 und 74 des Klärbeckens 3 und des Belebungsbeckens 4 bis zu einem kritischen Punkt anstauen.

Um zu vermeiden, dass das Abwasser in den Einlauf 9 der Kleinkläranlage 1 zurückfließt, liegt die höchste Stelle der Trennwand 2 bzw. des Abscheiders 6 unterhalb des Einlaufs 9. So kann das Abwasser 73 aus dem Klärbecken 3 direkt über eine Oberkante der Trennwand 2 in das Belebungsbecken 4 strömen. Der Abscheider 6 weist auf dessen Oberseite eine Überlauföffnung 14 auf, in welche das angestaute Abwasser 74 aus dem Belebungsbecken 4 in den Abscheider 6 einfließen kann. So kann zwar ungereinigtes Abwasser aus dem Auslauf 15 ausfließen, das Überlaufen der Kleinkläranlage 1 wird jedoch verhindert.

## Patentansprüche

1. Kleinkläranlage (1) zum Reinigen von Abwasser, welche mindestens ein Klärbecken (3) zum mechanischen Vorreinigen des Abwassers sowie mindestens ein Belebungsbecken (4) zum biologischen Reinigen des Abwassers aufweist, wobei beide Becken (3, 4) miteinander in Fluidverbindung stehen, und in dem Belebungsbecken (4) ein Abscheider (6) zum zumindest teilweisen Abscheiden von in dem Abwasser befindlichen Sinkstoffen angeordnet ist, wobei der Abscheider (6) mindestens einen Zulauf (10) aufweist,
**dadurch gekennzeichnet,**
**dass** der Abscheider (6) bodenseitig einen Schlammfang (13) zum Sammeln von Sinkstoffen aufweist, und der Zulauf (10) als eine den Volumenstrom des Abwassers in den Abscheider (6) dosierende Drossel ausgebildet ist.

2. Kleinkläranlage (1) nach Anspruch 1,
**dadurch gekennzeichnet,**
**dass** eine Rückführungsvorrichtung zum Rückführen von Abwasser (12) in dem Abscheider (6) befindlichen und Schlamm zumindest teilweise innerhalb des Abscheiders (6) angeordnet ist.

3. Kleinkläranlage (1) nach Anspruch 2,
**dadurch gekennzeichnet,**
**dass** die Rückführungsvorrichtung (12) strömungstechnisch mit dem Zulauf (10) des Abscheiders (6) verbunden ist

4. Kleinkläranlage (1) nach Anspruch 2 oder 3,
**dadurch gekennzeichnet,**
**dass** eine ansaugseitige Öffnung (29) der Rückführungsvorrichtung (12) im Bereich des Schlammfangs (13) des Abscheiders (6) angeordnet ist.

5. Kleinkläranlage (1) nach einem der Ansprüche 2 bis 4, wobei die Rückführungsvorrichtung (12) als ein eine Druckluftleitung (25) aufweisender Druckluftheber ausgeführt ist,
**dadurch gekennzeichnet,**
**dass** der Zulauf (10) des Abscheiders (6) in die Rückführungsvorrichtung (12) mündet, und die Druckluftleitung (25) zwischen der Ansaugöffnung (29) der Rückführungsvorrichtung (12) und dem Zulauf (10) des Abscheiders (6) angeordnet ist.

6. Kleinkläranlage (1) nach einem der Ansprüche 2 bis 5,
**dadurch gekennzeichnet,**
**dass** die Rückführungsvorrichtung (12) etwa zeitgleich zusammen mit einer in dem Belebungsbecken (4) angeordneten Belüftungsvorrichtung (20) betreibbar ist.

7. Kleinkläranlage (1) nach einem der Ansprüche 2 bis 6,
**dadurch gekennzeichnet,**
**dass** die Drosselwirkung des Zulaufs (10) derart ausgelegt ist, dass ein durch den Zulauf (10) in den Abscheider (6) einströmender Volumenstrom des Abwassers geringer ist als ein im gleichen Zeitraum durch die Rückführungsvorrichtung (12) aus dem Abscheider (6) heraus geleiteter Volumenstrom.

8. Kleinkläranlage (1) nach einem der vorhergehenden Ansprüche,
**dadurch gekennzeichnet,**
**dass** der Abscheider (6) einen natürlichen Überlauf aufweisenden Auslauf (15) aufweist, durch den das im Abscheider (6) angestaute Abwasser aus der Kleinkläranlage (1) herausfließen kann.

9. Kleinkläranlage (1) nach einem der vorhergehenden Ansprüche,
**dadurch gekennzeichnet,**
**dass** der Abscheider (6) eine zu dem Schlammfang (13) verlaufende Schräge (31) aufweist, an welcher im Abwasser befindliche Sinkstoffe abgleiten können.

10. Kleinkläranlage (1) nach einem der vorhergehenden Ansprüche,
**dadurch gekennzeichnet,**
**dass** der Zulauf (10) auf einer Höhe relativ zu dem Boden des Belebungsbeckens (4) angeordnet ist, welche einem Füllstand der in dem Belebungsbecken (4) angesammelten Sinkstoffe entspricht, und die Höhe derart gewählt ist, dass der Füllstand etwa 30% bis 50% des Gesamtvolumens des Belebungsbeckens (4) entspricht, insbesondere etwa 20% bis 30% des Gesamtvolumens des Belebungsbeckens (4) entspricht, und alternativ etwa 10% bis 20% des Gesamtvolumens des Belebungsbeckens (4) entspricht.

11. Verfahren zum Reinigen von Abwasser in einer Kleinkläranlage (1), wobei das zu reinigende Abwasser in einem Klärbecken (3) mechanisch vorgereinigt wird, und das Abwasser in einem mit dem Klärbecken (3) in Fluidverbindung stehendem Belebungsbecken (4) biologisch gereinigt wird, und das Abwasser in einen in dem Belebungsbecken (4) angeordneten Abscheider (6) einfließt, in welchem Sinkstoffe aus dem Abwasser abgeschieden werden,
**dadurch gekennzeichnet,**
**dass** sich abgeschiedene Sinkstoffe in einem Schlammfang (13) sammeln, welcher bodenseitig in dem Abscheider (6) angeordnet ist, und dass das Abwasser über einen Zulauf (10) in den Abscheider (6) fließt, wobei der in den Abscheider (6) einfließende Volumenstrom des Abwassers über eine Drossel des Zulaufs (10) dosiert wird.

12. Verfahren nach Anspruch 11,
**dadurch gekennzeichnet,**
**dass** Abwasser und Schlamm aus dem Schlammfang (13) über eine Rückführungsvorrichtung (12), welche zumindest teilweise innerhalb des Abscheiders (6) angeordnet ist, in das Klärbecken (3) rückgeführt werden.

13. Verfahren nach Anspruch 12,
**dadurch gekennzeichnet,**
**dass** der rückgeführte Abwasserstrom durch den Zulauf (10) strömendes Abwasser mit durch die Rückführungsvorrichtung (12) fördert, insbesondere saugt.

14. Verfahren nach Anspruch 12 oder 13, wobei die Rückführung des Abwassers mittels einer als Druckluftheber ausgeführten Rückführungsvorrichtung (12) geschieht,
**dadurch gekennzeichnet,**
**dass** der Druckluftheber im Zulauf (10) einen Unterdruck erzeugt, der im Bereich der Drossel befindliche Verschmutzungen löst und in die Rückführungsvorrichtung (12) fördert.

15. Verfahren nach Anspruch 14,
**dadurch gekennzeichnet,**
**dass** der Druckluftheber etwa zeitgleich zusammen mit einer in dem Belebungsbecken (4) angeordneten Belüftungsvorrichtung (20) betrieben wird.

16. Verfahren nach einem der Ansprüche 12 bis 15,
**dadurch gekennzeichnet,**
**dass** die Drossel den Volumenstrom des zulaufenden Abwassers dosiert, so dass der Volumenstrom des zulaufenden Abwassers geringer ist als ein im gleichen Zeitraum durch die Rückführungsvorrichtung (12) aus dem Abscheider (6) heraus geleiteter Abwasservolumenstrom.

17. Verfahren nach einem der Ansprüche 11 bis 16,
**dadurch gekennzeichnet,**
**dass** sich im Schlammfang (13) des Abscheiders (6) eine Schicht von Sinkstoffen ansammelt, dessen Höhe sich von der Höhe der im Belebungsbecken (4) angesammelten Schicht von Sinkstoffen unterscheidet.
